# FASCICULE DE BREVET EUROPEEN

(11) **EP 3 228 026 B1**
(45) Date de publication et mention de la délivrance du brevet: **27.05.2020**
(21) Numéro de dépôt: 15820206.9
(22) Date de dépôt: 02.12.2015
(51) Int. Cl.: H04B 10/114, H04B 10/116

(54) **DISPOSITIF ÉLECTRONIQUE ASSOCIÉ À UN MODULE PHOTOVOLTAÏQUE POUR OPTIMISER LE DÉBIT D'UNE TRANSMISSION BIDIRECTIONNELLE DE TYPE VLC**
ELEKTRONISCHE VORRICHTUNG IM ZUSAMMENHANG MIT EINEM PHOTOVOLTAISCHEN MODUL ZUR OPTIMIERUNG DES DURCHSATZES EINER BIDIREKTIONALEN VLC-ÜBERTRAGUNG
ELECTRONIC DEVICE ASSOCIATED WITH A PHOTOVOLTAIC MODULE TO OPTIMISE THE THROUGHPUT OF A BIDIRECTIONAL VLC TRANSMISSION

(30) Priorité: 02.12.2014 FR 1402737
(43) Date de publication de la demande: 11.10.2017
(73) Titulaire: Garmin Switzerland GmbH, 8200 Schaffhausen (CH)
(72) Inventeur: AVELINE, Franck, 13090 Aix en Provence (FR); BIALIC, Emilie, 13090 Aix en Provence (FR); CHAUMONT, Nicolas, 13090 Aix en Provence (FR)
(74) Mandataire: Bird & Bird LLP
(86) Numéro de dépôt international: PCT/FR2015/000218
(87) Numéro de publication internationale: WO 2016/087725

(56) Documents cités:
- WO-A2-99/31830
- GROBE LIANE ET AL: "High-speed visible light communication systems", IEEE COMMUNICATIONS MAGAZINE, IEEE SERVICE CENTER, PISCATAWAY, US, vol. 51, no. 12, 1 décembre 2013 (2013-12-01), pages 60-66, XP011534246, ISSN: 0163-6804, DOI: 10.1109/MCOM.2013.6685758 [extrait le 2013-12-16]

## Description

### Domaine technique de l'invention

La présente invention se rapporte aux dispositifs de communication par lumière visible ou invisible (IR et UV), dans le cadre de l'optimisation du débit des données transmises.

### Etat de la technique

Les dispositifs de communication par lumière visible (VLC ou LiFi, acronymes respectifs de Visible Light Communication et de Light Fidelity) utilisent la lumière visible pour transmettre une information entre deux points distants. Les systèmes de communication par la lumière visible comprennent en général une ou plusieurs diodes électroluminescentes (LED) formant un moyen d'émission et un photodétecteur formant un moyen de réception. La LED fournit un signal lumineux dans le visible dont l'intensité est modulée en fonction des données à transmettre. Les luminaires à LED présentent l'avantage de permettre la double fonction d'éclairage et de transmission de données. Leurs caractéristiques physiques permettent d'envisager des débits de transmission de données de l'ordre du gigabit par seconde (Gbit/s).

Un tel système de communication est avantageux en ce qu'on peut utiliser comme moyen de réception la plupart des photodétecteurs associés à un système de traitement de l'information permettant d'analyser la variation de l'amplitude du signal lumineux reçu et d'en déduire le signal transmis.

Il existe plusieurs types de modulations utilisées pour transmettre, à partir de LED, des données pouvant être réceptionnées par un photodétecteur, par exemple :
- une modulation de l'intensité lumineuse à moyenne non nulle, la modulation utilisée peut être alors de type NRZ (acronyme de Non-Return-to-Zero). C'est un codage à deux états, le signal se trouve dans un état (par exemple à l'état haut) lorsque des 1 logiques sont transmis, et dans l'autre état (à l'état bas par exemple) lorsque des 0 logiques sont transmis. Le photodétecteur transcrit alors l'intensité du signal lumineux reçu en signal électrique correspondant à la forme du signal électrique qui commande la source de lumière.
- une modulation de l'intensité à moyenne nulle avec ajout d'un courant de polarisation permettant la fonction d'éclairage. La modulation utilisée est de type OFDM (acronyme de Orthogonal Frequency-Division Multiplexing) appliqué au LiFi. Elle permet le contrôle de l'éclairement via le courant de polarisation, l'ajout du signal OFDM à moyenne nulle ne venant pas modifier le niveau de l'éclairement. Ce qui signifie que le photodétecteur transcrit alors les variations de l'intensité du signal lumineux reçu. Le photodétecteur est choisi de sorte qu'il n'y ait pas de saturation dudit détecteur liée à l'intensité de la lumière incidente, par exemple celle du soleil ou celle de la LED.

Si l'objectif est de réaliser simultanément les fonctions d'éclairage et de transmission des données, il est nécessaire d'une part de polariser le module de LED à partir d'un courant continu (composante continue ou DC), et d'autre part de moduler l'intensité du module de LED à partir d'un signal analogique temporel à moyenne nulle (composante alternative ou AC). C'est pourquoi la technologie OFDM LiFi est adaptée à ce type de double fonction.

Un dispositif classique de communication LiFi à bases de LED comprend :
- une source de données (internet par exemple) ;
- un module électronique spécifique permettant d'encoder les données du signal numérique en signal analogique ;
- un module de LED ;
- dans le cas de la fonction éclairage/transmission, un moyen de commande spécifique permettant d'additionner la tension (ou courant) de polarisation et le signal analogique contenant les données à transmettre ;
- un photodétecteur capable de détecter le signal lumineux modulé et de le transformer en signal électrique ;
- un module de traitement du signal capable d'exploiter le signal électrique généré par le photodétecteur.

Les modules photovoltaïques sont des photodétecteurs capables de transcrire un signal lumineux modulé en un signal électrique modulé, c'est-à-dire correspondant aux variations de l'intensité lumineuse et supposé représentatif de la forme du signal électrique qui commande la source de lumière. Un système de communication utilisant des modules photovoltaïques comme moyen de réception est avantageux en ce qu'il permet de s'affranchir de la polarisation (et donc d'un apport énergétique) du photodétecteur et permet aussi d'envisager d'apporter de l'énergie aux composants électroniques constituant ledit moyen de réception, par exemple au module de traitement du signal.

En général, les modules photovoltaïques sont optimisés pour produire le maximum d'énergie au moyen d'une adaptation d'impédance. La littérature propose une grande quantité de solutions sur l'algorithme de contrôle effectuant une recherche du point de puissance maximale (couramment appelé MPPT, acronyme de Maximum Power Point Tracking) lorsque le module photovoltaïque et la charge sont connectés à travers un convertisseur statique. La caractéristique I-V (Intensité sur Tension) du module photovoltaïque dépend du niveau d'éclairement, de la température et du vieillissement dudit module. Cependant, cette caractéristique I-V, lorsque la lumière est modulée est aussi une fonction de la fréquence, du type de modulation et de la profondeur de la modulation associée.

Afin d'extraire à chaque instant le meilleur signal modulé, il est nécessaire d'introduire un étage d'adaptation d'impédance entre le module photovoltaïque et le module de traitement du signal afin de coupler les deux éléments le plus parfaitement possible; mais les dispositifs connus permettant une adaptation d'impédance ne sont pas adaptés (car ils sont conçus pour extraire le maximum de puissance), et ne donnent donc pas de résultats satisfaisants en terme de traduction fidèle du signal lumineux modulé reçu par le module photovoltaïque. Lorsque l'impédance de charge d'un module photovoltaïque n'est pas optimisée, le signal électrique analogique généré par le module photovoltaïque est soit trop déformé pour que l'information qu'il contient puisse être traitée, soit trop faible pour être traité par le module de traitement du signal.

On connait, notamment au travers du document « High-speed visible light communication systems » IEEE Communications Magazine, IEEE Service Center, Piscataway, US, vol. 51, no. 12, 1 décembre 2013 (2013-12-01), pages 60-66, XPO11534246, ISSN : 0163-6804, DOI, des moyens électroniques pour amplifier le signal en sortie du photodétecteur. Dans le cas où le signal électrique a été correctement restitué en sortie du photodétecteur, l'utilisation d'un amplificateur trans-impédance (TIA par acronyme du terme anglais « Trans-Impedance Amplifier ») va permettre d'augmenter le niveau du signal et par voie de conséquence le rapport signal sur bruit (SNR par acronyme de la terminologie anglaise « Signal to Noise Ratio ») et donc potentiellement le débit. En revanche, si le signal n'a pas été correctement restitué à cause, par exemple, d'une mauvaise adaptation d'impédance du photodétecteur, le TIA n'ayant pas pour fonction d'adapter l'impédance en vue de corriger la déformation du signal électrique, ne fera qu'une amplification du signal déformé, ce qui aura pour conséquence une détérioration du SNR et donc du débit. Le TIA décrit dans ce document ou les systèmes électroniques d'amplification équivalents, ne visent donc pas à rechercher le maximum de SNR car ils ne cherchent que la maximalisation du niveau du signal. En outre, ce document ne divulgue ni ne suggère un système de communication optique sans fil dans lequel l'impédance du photodétecteur est variée par incréments successifs selon un signal de contrôle pour maximiser un critère de qualité du signal reçu.

### But de l'invention

L'invention a pour but principal de décrire un dispositif électronique qui permet d'augmenter la qualité et le niveau du signal électrique généré par un module photovoltaïque qui est éclairé par une lumière modulée. Cela permet d'une part de transmettre des données par ce mode de communication (VLC) en minimisant la déformation du signal reçu et d'autre part d'adapter d'une manière dynamique la réponse électrique du module photovoltaïque en fonction des caractéristiques en fréquences et/ou modulation des lumières qu'elle reçoit, afin d'augmenter le débit des données transmises.

### Objets de l'invention

L'objet de l'invention concerne un dispositif de communication sans fil bidirectionnel basé sur l'utilisation de la lumière, ainsi que plusieurs procédés d'adaptation d'impédance dudit dispositif.

Le dispositif de communication sans fil bidirectionnel objet de l'invention comprend au moins :
(a) un ou plusieurs modules d'émission, chaque module d'émission étant composé :
   - d'une source de lumière alimentée par un moyen de commande et émettant une lumière modulée en amplitude et/ou en phase ;
   - d'un moyen de commande qui génère un signal électrique issu de la conversion numérique/analogique des données sources à transmettre ;
(b) un module de réception composé :
   - d'un photodétecteur éclairé par ladite lumière modulée et générant un signal électrique modulé en réponse à ladite lumière modulée ;
   - d'un module de traitement du signal généré par ledit photodétecteur apte à communiquer avec le moyen de commande via une voie retour ;

Ledit dispositif de communication sans fil est caractérisé en ce que le module de réception comprend en outre un moyen électronique situé entre le photodétecteur et le module de traitement du signal et capable d'adapter l'impédance du photodétecteur afin de maximiser le rapport signal sur bruit du signal électrique modulé en minimisant les déformations dudit signal électrique modulé lié à une mauvaise adaptation d'impédance en sortie du photodétecteur, tout en maximisant le niveau du signal électrique modulé afin de maximiser le débit de données transmises.

Suivant différents modes de réalisation du dispositif, ledit photodétecteur est un module photovoltaïque apte à produire un courant électrique de charge ou d'alimentation.

Suivant différents modes de réalisation du dispositif, le moyen électronique capable d'adapter l'impédance du photodétecteur comprend :
- des composants physiques de valeurs variables, tels que des capacités, des inductances et/ou des résistances ;
- un module électronique de gestion desdits composants physiques.

Selon une variante de réalisation, le signal électrique généré par le module de commande peut comporter une composante continue et une composante alternative.

Suivant différents modes de réalisation du dispositif, la lumière modulée peut être une lumière incohérente ou cohérente, émise respectivement par une source de lumière telle qu'une diode électroluminescente ou une diode laser.

Selon une variante supplémentaire de réalisation du dispositif, ladite lumière modulée peut être émise par la source de lumière dans des gammes de longueurs d'ondes correspondant au visible, à l'ultra-violet et/ou à l'infra-rouge.

Selon une variante de réalisation, les données sources peuvent être un signal de référence ou des données de communication.

Dans un autre mode de réalisation particulier, le dispositif de communication par lumière visible selon l'invention comprend une pluralité de modules d'émission qui émettent des lumières modulées avec des caractéristiques de modulation différentes, le photodétecteur étant intégré à un objet mobile qui reçoit successivement l'une ou l'autre desdites lumières modulées et possédant un moyen électronique d'adaptation d'impédance apte à maximiser le débit de données transmises par chacun desdits modules d'émission.

Selon un premier exemple de procédé d'adaptation d'impédance du photodétecteur du dispositif de communication sans fil selon l'invention, on procède de la manière suivante
(a) on initialise la communication ;
(b) on fixe une valeur d'impédance initiale grâce au moyen électronique, ladite valeur étant fonction de la nature du photodétecteur ;
(c) on fixe un critère représentatif de la qualité du signal électrique reçu qui soit acceptable pour la communication, appelé critère de qualité acceptable ;
(d) on ajuste l'impédance du photodétecteur par incréments successifs de manière à maximiser le critère représentatif du niveau du signal électrique reçu, tant que le critère représentatif de la qualité du signal électrique reçu est meilleur que le critère de qualité acceptable ;
(e) on transmet le signal lumineux modulé contenant les données de communication.

Selon un deuxième exemple de procédé d'adaptation d'impédance du photodétecteur du dispositif de communication sans fil selon l'invention, on procède de la manière suivante
(a) on initialise la communication ;
(b) on fixe une valeur d'impédance initiale grâce au moyen électronique, ladite valeur étant fonction de la nature du photodétecteur ;
(c) on ajuste l'impédance du photodétecteur par incréments successifs de manière à améliorer le critère représentatif de la qualité du signal électrique reçu, ledit meilleur critère représentatif de la qualité du signal électrique reçu étant appelé critère de qualité optimisé à une impédance définie comme une impédance pré-optimisée ;
(d) on ajuste l'impédance pré-optimisée du photodétecteur par incréments successifs de manière à maximiser le critère représentatif du niveau du signal électrique reçu, tant que le critère représentatif de la qualité dudit signal électrique reçu est meilleur que le critère de qualité optimisé ;
(e) on transmet le signal lumineux modulé contenant les données de communication.

Dans un mode de réalisation particulier desdits procédés d'adaptation d'impédance, l'initialisation de la communication consiste à transmettre via le module d'émission un signal d'en-tête associé à un signal de référence connu du module de réception.

Dans un autre mode de réalisation particulier desdits procédés d'adaptation d'impédance, le critère représentatif de la qualité du signal transmis est une caractéristique de la transformée de Fourier, un taux d'erreur binaire, un taux d'erreur trame ou un taux d'erreur paquet du signal transmis.

De la même façon, le critère représentatif du niveau du signal transmis est un rapport signal sur bruit, une amplitude pic-pic, une amplitude maximale ou une amplitude minimale du signal transmis.

Enfin, l'ajustement de l'impédance du photodétecteur par incréments successifs de manière à atteindre un critère visé comprend des étapes consistant à :
(a) choisir un pas d'incrémentation ;
(b) mesurer les critères représentatifs de la qualité ou du niveau du signal électrique reçu obtenus respectivement pour le signal de référence, pour le signal reçu à une impédance égale à l'impédance initiale plus le pas d'incrémentation et pour le signal reçu à une impédance égale à l'impédance initiale moins le pas d'incrémentation ;
(c) comparer les critères représentatifs de la qualité ou du niveau du signal électrique reçu deux à deux, en fixant une valeur d'impédance correspondant au critère visé et en prenant pour nouveau signal de référence le signal électrique reçu avec ladite valeur d'impédance ;
(d) répéter les étapes de mesure et de comparaison des taux d'erreurs binaires ou des rapports signal sur bruit par une méthode itérative, jusqu'à ce que le critère visé soit atteint par le signal électrique de référence.

### Figures

L'invention sera mieux comprise à l'aide de sa description détaillée, en relation avec les figures, dans lesquelles :
- la figure 1 est un schéma du dispositif de communication sans fil bidirectionnel objet de l'invention ;
- les figures 2a, 2b et 2c sont des reproductions d'écran d'un oscilloscope qui affiche les courbes représentatives de la composante alternative du signal électrique émis par le module de commande et le signal électrique généré par un module photovoltaïque, pour différentes valeurs d'impédance ;
- la figure 3 est un schéma de principe d'un procédé d'adaptation d'impédance du module photovoltaïque du dispositif de communication sans fil objet de l'invention ;
- la figure 4 illustre un mode de réalisation particulier du dispositif objet de l'invention, dans lequel le module de réception est intégré à un objet mobile qui reçoit successivement plusieurs lumières modulées à partir de sources de lumière différentes.

### Description détaillée

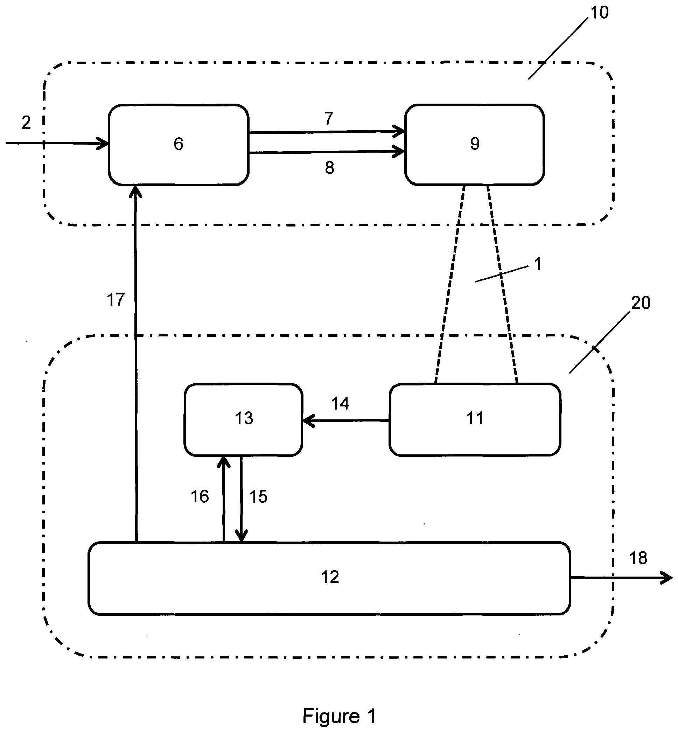

On se réfère à la figure 1, qui est un schéma du dispositif de communication sans fil bidirectionnel objet de l'invention. Ce dispositif comprend un module d'émission **10** et un module de réception **20.** Le module d'émission **10** permet d'encoder des données sources numériques **2,** issues par exemple d'internet, pour les transmettre sous la forme d'une lumière **1** modulée en amplitude et/ou en phase. Pour ce faire, la source de lumière **9,** telle qu'une diode électroluminescente, est alimentée par un moyen de commande **6** qui génère un signal électrique comportant généralement une composante continue **7** et une composante alternative **8.** La composante continue **7** sert à polariser ladite diode électroluminescente **9** afin de réaliser la fonction d'éclairage, et la composante alternative **8** est issue de la conversion numérique/analogique des données sources **2.** Le module de réception **20** est composé d'un photodétecteur tel qu'un module photovoltaïque **11** qui transforme la lumière modulée **1** en signal électrique modulé **14,** d'un moyen électronique **13** d'adaptation de l'impédance du module photovoltaïque **11,** ainsi que d'un module de traitement **12** du signal électrique **15.** Le module de traitement **12** du signal électrique **15** est apte à communiquer avec le moyen de commande **6** du module d'émission **10** via la voie retour **17,** et avec l'organe de gestion du moyen électronique **13** d'adaptation d'impédance via la voie **16.** Le rôle du moyen électronique **13** est d'adapter l'impédance du module photovoltaïque **11** qui joue sur la qualité et le niveau du signal électrique **15** afin de maximiser le débit des données transmises **18,**

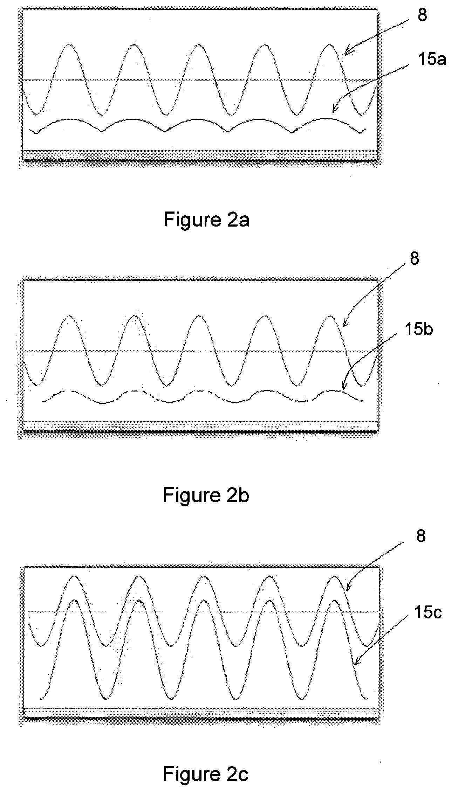

Les figures 2a, 2b et 2c sont des reproductions d'écran d'un oscilloscope qui affiche les courbes représentatives de la composante alternative **8** du signal électrique émis par le module de commande **6** à une fréquence de 1 kHz et du signal électrique **15** généré par le module photovoltaïque **11** pour différentes valeurs d'impédance ajustées via le moyen électronique **13**.

Les figures 2a et 2b présentent deux cas où l'adaptation d'impédance n'est pas optimisée. Le signal électrique **15a** est déformé et son amplitude est trop faible pour que le module de traitement du signal **12** ne puisse le détecter (figure 2a). La qualité et le niveau du signal ne sont donc pas acceptables pour que la communication ait lieu. Le signal électrique **15b** n'est pas déformé, mais son amplitude est trop faible pour que le module de traitement du signal **12** ne puisse le détecter (figure 2b). Dans ce cas, c'est le niveau du signal qui limite la communication. La figure 2c présente une adaptation d'impédance optimisée, avec un signal électrique **15c** dont la qualité et le niveau sont bons. Cette dernière configuration permet de maximiser le débit de données transmises **18.**

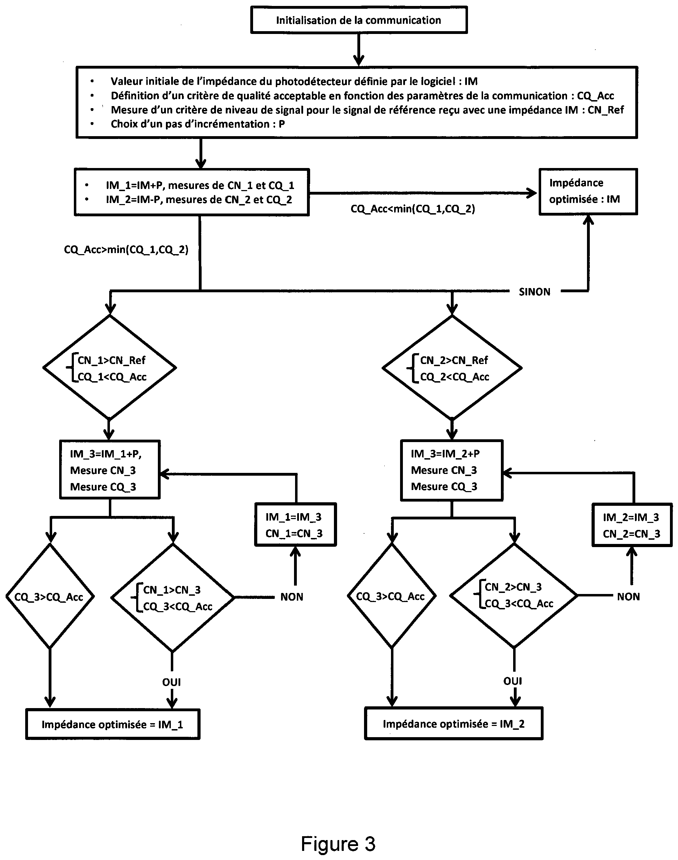

La figure 3 est un schéma de principe d'un procédé d'adaptation d'impédance du module photovoltaïque du dispositif de communication sans fil objet de l'invention. Pour faciliter la compréhension de la description de la figure 3, on prend pour critère de qualité (CQ) du signal reçu le taux d'erreur binaire ou le taux d'erreur paquet, que l'on cherche du coup à minimiser dans cet exemple. On prend également pour critère de niveau (CN) le rapport signal sur bruit. Ledit procédé d'adaptation d'impédance comprend les étapes suivantes :
1. Initialisation de la communication ;
2. Initialisation du système en :
   a. choisissant la valeur initiale de l'impédance IM du module photovoltaïque définie par le logiciel d'adaptation d'impédance fonction notamment de la nature du photodétecteur et du type de modulation ;
   b. définissant un critère de qualité acceptable CQ_Acc en fonction des paramètres de la communication tels que le débit, le type de modulation ou l'éclairement ;
   c. mesurant un critère de niveau de signal CN_Ref pour le signal de référence reçu avec une impédance initiale IM ;
   d. choisissant le pas d'incrémentation P, dont la valeur peut-être réelle ou imaginaire ;
3. Algorithme d'adaptation d'impédance comprenant les étapes suivantes :
   a. Initialisation de l'adaptation d'impédance ;
      i. Initialisation de la valeur IM_1 égale à la valeur IM+P ;
         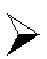 Mesure de CN_1 (correspondant à la valeur de IM_1)
         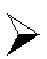 Mesure de CQ_1 (correspondant à la valeur de IM_1)
      ii. Initialisation de la valeur IM_2 égale à la valeur IM-P ;
         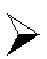 Mesure de CN_2 (correspondant à la valeur de IM_2)
         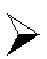 Mesure de CQ_2 (correspondant à la valeur de IM_2)
   b. Adaptation d'impédance ;
      i. Si CQ_Acc>min(CQ_1, CQ_2)
         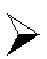 Si CN_1 >CN_ref et CQ_1 <CQ_Acc
            - Initialisation* de la valeur IM_3=IM_1+P Mesures des valeurs CN_3 et CQ_3
               - Si CN_1 <CN_3 et CQ_3<CQ_Acc
                  Alors IM_1=IM_3 et CN_1=CN_3 et le processus reprend à l'étape d'initialisation* de la valeur IM_3=IM_1+P
               - Si CN_1 >CN_3 et CQ_3<CQ_Acc
                  Alors l'impédance est optimisée et a pour valeur IM_1
               - Si CQ_3>CQ_Acc
                  Alors l'impédance est optimisée et a pour valeur IM_1
         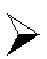 Si CN_2>CN_Ref et CQ_2<CQ_Acc
            - Initialisation** de la valeur IM_3=IM_2+P Mesures de la valeur CN_3 et CQ_3
               - Si CN_2<CN_3 et CQ_3<CQ_Acc
                  Alors IM_2=IM_3 et CN_2=CN_3 et le processus reprend à l'étape d'initialisation** de la valeur IM_3=IM_2+P
               - Si CN_2>CN_3 et CQ_3<CQ_Acc
                  Alors l'impédance est optimisée et a pour valeur IM_2
               - Si CQ_3>CQ_Acc
                  Alors l'impédance est optimisée et a pour valeur IM_2
         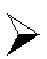 Sinon l'impédance optimisée a pour valeur IM
      ii. Si CQ_Acc<min(CQ_1, CQ_2)
         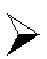 L'impédance est optimisée et la valeur de cette impédance est égale à IM

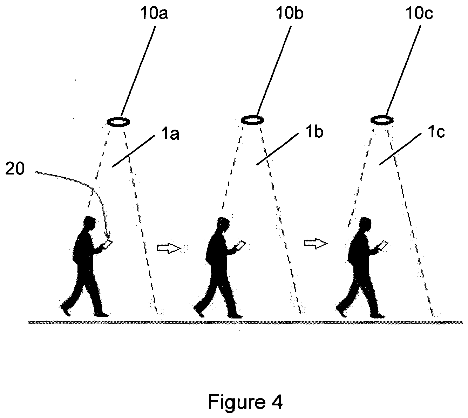

La figure 4 illustre un mode de réalisation particulier du dispositif objet de l'invention, dans lequel le module de réception **20** est intégré à un objet mobile qui reçoit successivement, au cours de ses déplacements, plusieurs lumières modulées (**1a,1b,1c**) issues de modules d'émission différents (**10a,10b,10c**) et dont les modulations en fréquence et/ou en phase peuvent être différentes. Cela illustre la capacité du module de réception **20,** grâce à la fonction d'adaptation d'impédance du module photovoltaïque **11,** à décoder de manière universelle des données sources transmises par différents modules d'émission (**10a,10b,10c**).

### Avantages de l'invention

En définitive l'invention répond bien aux buts fixés en permettant d'améliorer la qualité et le niveau du signal reçu par un photodétecteur, ce qui permet d'augmenter les débits de transmission des données et/ou de pouvoir décoder successivement des informations transmises par différents modules d'émission.

## Revendications

1. Dispositif de communication sans fil bidirectionnel par lumière visible ou invisible comprenant au moins :
(a) un ou plusieurs modules d'émission (10), chaque module d'émission (10) étant composé :
- d'une source de lumière (9) alimentée par un moyen de commande (6) et émettant une lumière modulée (1) en amplitude et/ou en phase ;
- d'un moyen de commande (6) qui génère un signal électrique issu de la conversion numérique/analogique des données sources (2) à transmettre ;
(b) un module de réception (20) composé :
- d'un photodétecteur (11) éclairé par ladite lumière modulée (1) et générant un signal électrique modulé (14,15) en réponse à ladite lumière modulée (1) ;
- d'un module de traitement (12) du signal généré par ledit photodétecteur (11) apte à communiquer avec le moyen de commande (6) via la voie retour (17) ;
- d'un moyen électronique (13) situé entre le photodétecteur (11) et le module de traitement du signal (12) et capable d'adapter l'impédance du photodétecteur (11) afin de maximiser le débit de données transmises (18) en minimisant la déformation du signal reçu ;
**Caractérisé en ce que** le photodétecteur (11) est un module photovoltaïque et ledit moyen électronique (13) d'adaptation d'impédance est configuré pour faire varier l'impédance du photodétecteur (11) par incréments successifs en fonction d'un signal de contrôle correspondant à un critère de qualité acceptable (CQ_Acc), et pour maximiser le niveau du signal électrique reçu, tant qu'un critère représentatif de la qualité du signal électrique reçu est meilleur que ledit critère de qualité acceptable (CQ_Acc).

2. Dispositif de communication sans fil selon la revendication 1, **caractérisé en ce que** ledit photodétecteur (11) est un module photovoltaïque apte à produire un courant électrique de charge ou d'alimentation.

3. Dispositif de communication sans fil selon l'une quelconque des revendications précédentes, **caractérisé en ce que** ledit moyen électronique (13) capable d'adapter l'impédance du photodétecteur (11) comprend :
- des des capacités, des inductances et/ou des résistances ;
- un module électronique de gestion desdits composants physiques.

4. Dispositif de communication sans fil selon l'une quelconque des revendications précédentes, **caractérisé en ce que** le signal électrique généré par ledit module de commande (6) comporte une composante continue (7) et une composante alternative (8).

5. Dispositif de communication sans fil selon l'une quelconque des revendications précédentes, **caractérisé en ce que** ladite lumière modulée (1) est une lumière incohérente ou cohérente, émise respectivement par une source de lumière (9) telle qu'une diode électroluminescente ou une diode laser.

6. Dispositif de communication sans fil selon l'une quelconque des revendications précédentes, **caractérisé en ce que** ladite lumière modulée (1) est émise par la source de lumière (9) dans des gammes de longueurs d'ondes correspondant au visible, à l'ultra-violet et/ou à l'infra-rouge.

7. Dispositif de communication sans fil selon l'une quelconque des revendications précédentes, **caractérisé en ce que** lesdites données sources (2) peuvent être un signal de référence ou des données de communication.

8. Dispositif de communication par lumière visible selon l'une des revendications précédentes, **caractérisé en ce que** ledit dispositif comprend une pluralité de modules d'émission (10a,10b,10c) qui émettent des lumières modulées (1a,1b,1c) avec des caractéristiques de modulation différentes, le photodétecteur (11) étant intégré à un objet mobile qui reçoit successivement l'une ou l'autre desdites lumières modulées (1a,1b,1c) et possédant un moyen électronique (13) d'adaptation d'impédance apte à maximiser le débit de données transmises par chacun desdits modules d'émission (10a, 10b, 10c).

9. Procédé d'adaptation d'impédance du photodétecteur (11) du dispositif de communication sans fil selon l'une quelconque des revendications précédentes, **caractérisé en ce qu'**il comporte des étapes consistant à :
(a) initialiser la communication ;
(b) fixer une valeur d'impédance initiale (IM) grâce au moyen électronique (13), ladite valeur étant fonction de la nature du photodétecteur (11) ;
(c) fixer un critère représentatif de la qualité du signal électrique reçu qui soit acceptable pour la communication, appelé critère de qualité acceptable (CQ_Acc) ;
(d) ajuster l'impédance du photodétecteur (11) par incréments successifs de manière à maximiser le critère représentatif du niveau du signal électrique reçu, tant que le critère représentatif de la qualité du signal électrique reçu est meilleur que le critère de qualité acceptable (CQ_Acc) ;
(e) transmettre le signal lumineux modulé (1) contenant les données de communication.

10. Procédé d'adaptation d'impédance du photodétecteur (11) du dispositif de communication sans fil selon l'une quelconque des revendications 1 à 8, **caractérisé en ce qu'**il comporte des étapes consistant à :
(a) initialiser la communication ;
(b) fixer une valeur d'impédance initiale (IM) grâce au moyen électronique (13), ladite valeur étant fonction de la nature du photodétecteur (11) ;
(c) ajuster l'impédance du photodétecteur (11) par incréments successifs de manière à améliorer le critère représentatif de la qualité du signal électrique reçu, ledit meilleur critère représentatif de la qualité du signal électrique reçu étant appelé critère de qualité optimisé à une impédance définie comme une impédance pré-optimisée ;
(d) ajuster l'impédance pré-optimisée du photodétecteur (11) par incréments successifs de manière à maximiser le critère représentatif du niveau du signal électrique reçu, tant que le critère représentatif de la qualité dudit signal électrique reçu est meilleur que le critère de qualité optimisé ;
(e) transmettre le signal lumineux modulé (1) contenant les données de communication.

11. Procédé d'adaptation d'impédance du photodétecteur (11) du dispositif de communication sans fil selon l'une des revendications 9 ou 10, **caractérisé en ce que** l'initialisation de la communication consiste à transmettre via le module d'émission (10) un signal d'en-tête associé à un signal de référence connu du module de réception (20).

12. Procédé d'adaptation d'impédance du photodétecteur (11) du dispositif de communication sans fil selon l'une quelconque des revendications 9 à 11, **caractérisé en ce que** le critère représentatif de la qualité du signal transmis est une caractéristique de la transformée de Fourier, un taux d'erreur binaire, un taux d'erreur trame ou un taux d'erreur paquet du signal transmis.

13. Procédé d'adaptation d'impédance du photodétecteur (11) du dispositif de communication sans fil selon l'une quelconque des revendications 9 à 12, **caractérisé en ce que** le critère représentatif du niveau du signal transmis est un rapport signal sur bruit, une amplitude pic-pic, une amplitude maximale ou une amplitude minimale du signal transmis.

14. Procédé d'adaptation d'impédance du photodétecteur (11) du dispositif de communication sans fil selon l'une des revendications 9 à 13, **caractérisé en ce que** l'ajustement de l'impédance du photodétecteur (11) par incréments successifs de manière à atteindre un critère visé comprend des étapes consistant à :
(a) choisir un pas (P) d'incrémentation ;
(b) mesurer les critères représentatifs de la qualité (CQ_Ref, CQ_1, CQ_2) ou du niveau (CN_Ref, CN_1, CN_2) du signal électrique reçu obtenus respectivement pour le signal de référence, pour le signal reçu à une impédance (IM_1) égale à l'impédance initiale plus le pas d'incrémentation (IM+P) et pour le signal reçu à une impédance (IM_2) égale à l'impédance initiale moins le pas d'incrémentation (IM-P) ;
(c) comparer les critères représentatifs de la qualité (CQ_Ref, CQ_1, CQ_2) ou du niveau (CN_Ref, CN_1, CN_2) du signal électrique reçu deux à deux, en fixant une valeur d'impédance correspondant au critère visé et en prenant pour nouveau signal de référence le signal électrique reçu avec ladite valeur d'impédance ;
(d) répéter les étapes de mesure et de comparaison des taux d'erreurs binaires ou des rapports signal sur bruit par une méthode itérative, jusqu'à ce que le critère visé soit atteint par le signal électrique de référence.

## Patentansprüche

1. Vorrichtung zur drahtlosen bidirektionalen Kommunikation durch sichtbares oder unsichtbares Licht, mindestens umfassend
(a) ein oder mehrere Sendemodule (10), wobei jedes Sendemodul (10) aufweist
- eine Lichtquelle (9), die durch ein Steuermittel (6) versorgt wird und amplituden- oder phasenmoduliertes Licht (1) sendet,
- ein Steuermittel (6), das ein elektrisches Signal erzeugt, das aus einer Digital-/Analog-Umwandlung zu übertragender Quellendaten (2) stammt,
(b) ein Empfangsmodul (20) aufweisend
- einen Fotodetektor (11), der von dem modulierten Licht (1) beleuchtet wird und ein moduliertes elektrisches Signal (14, 15) in Reaktion auf das modulierte Licht (1) erzeugt,
- ein Verarbeitungsmodul (12) des von dem Fotodetektor (11) erzeugten Signals, das geeignet ist, mit dem Steuermittel (6) über den Rückweg (17) zu kommunizieren,
- ein elektronisches Mittel (13), das zwischen dem Fotodetektor (11) und dem Verarbeitungsmodul (12) des Signals angeordnet und geeignet ist, die Impedanz des Fotodetektors (11) zu adaptieren, um die übertragene Datenmenge (18) zu maximieren, während die Deformation des empfangenen Signals minimiert wird,
**dadurch gekennzeichnet, dass** der Fotodetektor (11) ein Fotovoltaikmodul ist und dass das elektronische Mittel (13) zur Impedanzadaptation eingerichtet ist, um die Impedanz des Fotodetektors (11) in aufeinanderfolgenden Inkrementen in Abhängigkeit von einem Kontrollsignal, das einem akzeptablen Qualitätskriterium (CQ_Acc) entspricht, zu variieren, und um den Pegel des empfangenen elektrischen Signals zu maximieren, solange ein für die Qualität des empfangenen elektrischen Signals repräsentatives Kriterium besser als das akzeptable Qualitätskriterium (CQ_Acc) ist.

2. Drahtlose Kommunikationsvorrichtung nach Anspruch 1, **dadurch gekennzeichnet, dass** der Fotodetektor (11) ein Fotovoltaikmodul ist, das geeignet ist, elektrischen Ladestrom oder Versorgungsstrom zu erzeugen.

3. Drahtlose Kommunikationsvorrichtung nach einem der vorhergehenden Ansprüche, **dadurch gekennzeichnet, dass** das elektronische Mittel (13), das geeignet ist, die Impedanz des Fotodetektors (11) zu adaptieren, umfasst:
- Kapazitäten, Induktivitäten und/oder Widerstände,
- ein elektronisches Modul zur Verwaltung der physischen Komponenten.

4. Drahtlose Kommunikationsvorrichtung nach einem der vorhergehenden Ansprüche, **dadurch gekennzeichnet, dass** das von dem Steuermodul (6) erzeugte elektrische Signal eine Gleichstromkomponente (7) und eine Wechselstromkomponente (8) umfasst.

5. Drahtlose Kommunikationsvorrichtung nach einem der vorhergehenden Ansprüche, **dadurch gekennzeichnet, dass** das modulierte Licht (1) inkohärentes oder kohärentes Licht ist, das jeweils von einer Lichtquelle (9), wie einer Leuchtdiode oder einer Laserdiode gesandt wird.

6. Drahtlose Kommunikationsvorrichtung nach einem der vorhergehenden Ansprüche, **dadurch gekennzeichnet, dass** das modulierte Licht (1) von der Lichtquelle (9) in Wellenlängenbereichen entsprechend dem sichtbaren, dem ultravioletten Bereich und/oder dem Infrarotbereich gesandt wird.

7. Drahtlose Kommunikationsvorrichtung nach einem der vorhergehenden Ansprüche, **dadurch gekennzeichnet, dass** die Quellendaten (2) ein Referenzsignal oder Kommunikationsdaten sein können.

8. Vorrichtung zur Kommunikation durch sichtbares Licht nach einem der vorhergehenden Ansprüche, **dadurch gekennzeichnet, dass** die Vorrichtung eine Vielzahl von Sendemodulen (10a, 10b, 10c) umfasst, die jeweils moduliertes Licht (1a, 1b, 1c) mit verschiedenen Modulationseigenschaften aussenden, wobei der Fotodetektor (11) in ein mobiles Objekt integriert ist, das nacheinander das eine oder das andere des jeweils modulierten Lichts (1a, 1b, 1c) empfängt, und ein elektronisches Mittel (13) zur Impedanzadaptation besitzt, das geeignet ist, die von jedem der Sendemodule (10a, 10b, 10c) übertragene Datenmenge zu maximieren.

9. Verfahren zur Impedanzadaptation des Fotodetektors (11) der drahtlosen Kommunikationsvorrichtung nach einem der vorhergehenden Ansprüche, **dadurch gekennzeichnet, dass** es Schritte umfasst, darin bestehend:
(a) die Kommunikation zu initialisieren,
(b) einen Anfangsimpedanzwert (IM) durch das elektronische Mittel (13) festzusetzen, wobei der Wert von der Natur des Fotodetektors (11) abhängt,
(c) ein Kriterium festzusetzen, das für die Qualität des empfangenen elektrischen Signals, die für die Kommunikation akzeptabel ist, akzeptables Qualitätskriterium (CQ_Acc) genannt, repräsentativ ist,
(d) die Impedanz des Fotodetektors (11) durch aufeinanderfolgende Inkremente anzupassen, um das für den Pegel des empfangenen elektrischen Signals repräsentative Kriterium zu maximieren, solange das für die Qualität des empfangenen elektrischen Signals repräsentative Kriterium besser als das akzeptable Qualitätskriterium (CQ_Acc) ist,
(e) das modulierte Lichtsignal (1), das die Kommunikationsdaten enthält, zu übertragen.

10. Verfahren zur Impedanzadaptation des Fotodetektors (11) der drahtlosen Kommunikationsvorrichtung nach einem der Ansprüche 1 bis 8, **dadurch gekennzeichnet, dass** es Schritte umfasst, darin bestehend:
(a) die Kommunikation zu initialisieren,
(b) einen Anfangsimpedanzwert (IM) durch das elektronische Mittel (13) festzusetzen, wobei der Wert von der Natur des Fotodetektors (11) abhängt,
(c) die Impedanz des Fotodetektors (11) durch aufeinanderfolgende Inkremente anzupassen, um das für die Qualität des empfangenen elektrischen Signals repräsentative Kriterium zu verbessern, wobei das verbesserte für die Qualität des empfangenen elektrischen Signals repräsentative Kriterium optimiertes Qualitätskriterium bei einer als eine vor-optimierte Impedanz definierten Impedanz genannt wird,
(d) die vor-optimierte Impedanz des Fotodetektors (11) durch aufeinanderfolgende Inkremente anzupassen, um das für den Pegel des empfangenen Signals repräsentative Kriterium zu maximieren, solange das für die Qualität des empfangenen Signals repräsentative Kriterium besser als das optimierte Qualitätskriterium ist,
(e) das modulierte Lichtsignal (1), das die Kommunikationsdaten enthält, zu übertragen.

11. Verfahren zur Impedanzadaptation des Fotodetektors (11) der drahtlosen Kommunikationsvorrichtung nach einem der Ansprüche 9 oder 10, **dadurch gekennzeichnet, dass** die Initialisierung der Kommunikation darin besteht, über das Sendemodul (10) ein Headersignal zu übertragen, das einem bekannten Referenzsignal des Empfangsmoduls (20) zugeordnet ist.

12. Verfahren zur Impedanzadaptation des Fotodetektors (11) der drahtlosen Kommunikationsvorrichtung nach einem der Ansprüche 9 bis 11, **dadurch gekennzeichnet, dass** das für die Qualität des übertragenen Signals repräsentative Kriterium ein Merkmal der Fourier-Transformierten, eine binäre Fehlerrate, eine Raster-Fehlerrate oder eine Paket-Fehlerrate des übertragenen Signals ist.

13. Verfahren zur Impedanzadaptation des Fotodetektors (11) der drahtlosen Kommunikationsvorrichtung nach einem der Ansprüche 9 bis 12, **dadurch gekennzeichnet, dass** das für den Pegel des übertragenen Signals repräsentative Kriterium ein Signal-Rausch-Verhältnis, eine Spitzen-Spitzen-Amplitude, eine maximale Amplitude oder eine minimale Amplitude des übertragenen Signals ist.

14. Verfahren zur Impedanzadaptation des Fotodetektors (11) der drahtlosen Kommunikationsvorrichtung nach einem der Ansprüche 9 bis 13, **dadurch gekennzeichnet, dass** die Anpassung der Impedanz des Fotodetektors (11) durch aufeinanderfolgende Inkremente, um ein angestrebtes Kriterium zu erreichen, Schritte umfasst, darin bestehend:
(a) einen Inkrementenhub (P) auszuwählen,
(b) die für die Qualität des empfangenen Signals repräsentativen Kriterien (CQ_ref, CQ_1, CQ_2) oder für den Pegel des empfangenen Signals repräsentativen Kriterien (CN_Ref, CN_1, CN_2) zu messen, die jeweils für das Referenzsignal, für das bei einer Impedanz (IM_1) gleich der Anfangsimpedanz plus den Inkrementenhub (IM+P) empfangene Signal und das bei einer Impedanz (IM_2) gleich der Anfangsimpedanz weniger den Inkrementenhub (IM-P) empfangene Signal erhalten wurden;
(c) die für die Qualität des empfangenen Signals repräsentativen Kriterien (CQ_ref, CQ_1, CQ_2) oder für den Pegel des empfangenen Signals repräsentativen Kriterien (CN_Ref, CN_1, CN_2) zwei und zwei zu vergleichen, wobei ein Impedanzwert festgesetzt wird, der dem angestrebten Kriterium entspricht, und wobei als neues Referenzsignal das mit dem Impedanzwert empfangene elektrische Signal herangezogen wird,
(d) die Schritte des Messens und Vergleichens der binären Fehlerraten oder der Signal-Rausch-Verhältnisse durch eine iterative Methode zu wiederholen, bis das angestrebte Kriterium durch das elektrische Referenzsignal erreicht ist.

## Claims

1. Device for bidirectional wireless communication by visible or invisible light, comprising at least
(a) one or more transmitter modules (10), each transmitter module (10) comprising:
- a light source (9) which is powered by a control means (6) and emits an amplitude and/or phase modulated light (1) ;
- a control means (6) which generates an electrical signal derived from the digital/analogue conversion of source data (2) to be transmitted;
(b) a receiver module (20) comprising:
- a photodetector (11) illuminated by said modulated light (1) and generating a modulated electrical signal (14, 15) in response to said modulated light (1);
- a processing module (12) for the signal generated by said photodetector (11) which is designed to communicate with the control means (6) via the return path (17);
- an electronic means (13) which is located between the photodetector (11) and the signal processing module (12) and able to adjust the impedance of the photodetector (11) in order to maximise the throughput rate of transmitted data (18) while minimising the distortion of the signal received;
**characterized in that** the photodetector (11) is a photovoltaic module and said electronic means (13) for adjusting impedance is configured to vary the impedance of the photodetector (11) in successive increments as a function of a control signal corresponding to an acceptable quality criterion (CQ_Acc), and to maximise the level of the electric signal received, provided that a criterion representing the quality of the electrical signal received is better than said acceptable quality criterion (CQ_Acc).

2. Wireless communication device according to Claim 1, **characterized in that** said photodetector (11) is a photovoltaic module which is designed to produce an electric current for charging or supply.

3. Wireless communication device according to any one of the preceding claims, **characterized in that** said electronic means (13) which is able to adjust the impedance of the photodetector (11) includes:
- capacitances, inductances and/or resistances;
- an electronic module for managing said physical components.

4. Wireless communication device according to any one of the preceding claims, **characterized in that** the electrical signal generated by said control module (6) includes a continuous (7) and an alternative component (8).

5. Wireless communication device according to any one of the preceding claims, **characterized in that** said modulated light (1) is an incoherent or coherent light, emitted respectively by a light source (9) such as an electroluminescent diode or a laser diode.

6. Wireless communication device according to any one of the preceding claims, **characterized in that** said modulated light (1) is emitted by the light source (9) in wavelength ranges corresponding to visible, ultraviolet and/or infrared light.

7. Wireless communication device according to any one of the preceding claims, **characterized in that** said source data (2) may be a reference signal or communication data.

8. Device for wireless communication device by visible light according to any one of the preceding claims, **characterized in that** said device comprises a plurality of transmitter modules (10a, 10b, 10c) which emit modulated light (1a, 1b, 1c) having different modulation characteristics, wherein the photodetector (11) is integrated in a mobile object which receives one or other of said modulated lights (1a, 1b, 1c) successively and is equipped with an electronic means (13) for adjusting impedance which is designed to maximise the throughput rate of the data transmitted by each of said transmitter modules (10a, 10b, 10c).

9. Method for adjusting impedance of the photodetector (11) of the wireless communication device according to any one of the preceding claims, **characterized in that** it includes steps consisting of:
(a) initialising the communication;
(b) establishing an initial impedance value (IM) with the aid of the electronic means (13), which value is a function of the nature of the photodetector (11);
(c) establishing a criterion representing the quality of the received electrical signal which is acceptable for communication, called the acceptable quality criterion (CQ_Acc);
(d) adjusting the impedance of the photodetector (11) by successive increments in such a manner as to maximise the criterion representing the level of the received electrical signal, providing that the criterion representing the quality of the received electrical signal is better than the acceptable quality criterion (CQ_Acc);
(e) transmitting the modulated light signal (1) containing the communication data.

10. Method for adjusting impedance of the photodetector (11) of the wireless communication device according to any one of Claims 1 to 8, **characterized in that** it includes steps consisting of:
(a) initialising the communication;
(b) establishing an initial impedance value (IM) with the aid of the electronic means (13), which value is a function of the nature of the photodetector (11);
(c) adjusting the impedance of the photodetector (11) by successive increments in such a manner as to improve the criterion representing the quality of the received electrical signal, said improved criterion representing the quality of the received electrical signal being called the optimised quality criterion at an impedance defined as a pre-optimised impedance;
(d) adjusting the pre-optimised impedance of the photodetector (11) by successive increments in such a manner as to maximise the criterion representing the level of the received electrical signal, provided that the criterion representing the quality of sad received electrical signal is better than the optimised quality criterion;
(e) transmitting the modulated light signal (1) containing the communication data.

11. Method for adjusting impedance of the photodetector (11) of the wireless communication device according to either of Claims 9 or 10, **characterized in that** the initialisation of the communication consists of transmitting, via the transmitter module (10), a header signal associated with a known reference signal of the receiver module (20).

12. Method for adjusting impedance of the photodetector (11) of the wireless communication device according to any one of Claims 9 to 11, **characterized in that** the criterion representing the quality of the transmitted signal is a Fourier transform characteristic, a bit error rate, a frame error rate, or a packet error rate of the transmitted signal.

13. Method for adjusting impedance of the photodetector (11) of the wireless communication device according to any one of Claims 9 to 12, **characterized in that** the criterion representing the level of the transmitted signal is a signal-to-noise ratio, a peak-to-peak amplitude, a maximum amplitude or a minimum amplitude of the signal.

14. Method for adjusting impedance of the photodetector (11) of the wireless communication device according to any one of Claims 9 to 13, **characterized in that** the adjustment of the impedance of the photodetector (11) by successive increments in such a manner as to reach a target criterion includes steps consisting of:
(a) choosing an incremental step (P);
(b) measuring the criteria representing the quality (CQ_Ref, CQ_1, CQ_2) or the level (CN_Ref, CN_1, CN_2) of the received electrical signal which are obtained respectively for the reference signal, for the signal received at an impedance (1M_1) equal to the initial impedance plus the incremental step (IM+P), and for the signal received at an impedance (IM_2) equal to the initial impedance minus the incremental step (IM-P);
(c) comparing the criteria representing the quality (CQ_Ref, CQ_1, CQ_2) or level (CN_Ref, CN_1, CN_2) of the received electrical signal two by two, establishing an impedance value corresponding to the target criterion and taking the received electrical signal with said impedance value as the new reference signal;
(d) repeating the steps of measuring and comparing the bit error rates or the signal-to-noise ratios iteratively until the target criterion is reached by the reference electrical signal.
